# EUROPÄISCHE PATENTSCHRIFT

(11) **EP 2 021 661 B1**
(45) Veröffentlichungstag und Bekanntmachung des Hinweises auf die Patenterteilung: **16.06.2010**
(21) Anmeldenummer: 07711947.7
(22) Anmeldetag: 14.03.2007
(51) Int. Cl.: F16J 15/34

(54) **GLEITRINGDICHTUNGSANORDNUNG**
SLIDING RING SEALING ARRANGEMENT
GARNITURE MÉCANIQUE D'ÉTANCHÉITÉ

(30) Priorität: 31.05.2006 DE 202006008633 U
(43) Veröffentlichungstag der Anmeldung: 11.02.2009
(73) Patentinhaber: Burgmann Industries GmbH & Co. KG, 82515 Wolfratshausen (DE)
(72) Erfinder: SVEJKOVSKY, Reinhard, 82538 Geretsried (DE); RIES, Wolfgang, 82438 Eschenlohe (DE); KACHLER, Peter, 82049 Pullach (DE)
(74) Vertreter: Schaeberle, Steffen
(86) Internationale Anmeldenummer: PCT/EP2007/002268
(87) Internationale Veröffentlichungsnummer: WO 2007/137641

(56) Entgegenhaltungen:
- DE-U1- 20 202 177
- DE-U1- 29 800 712
- US-A- 3 479 039

## Beschreibung

Die Erfindung betrifft eine Gleitringdichtungsanordnung.

Die Erfindung betrifft insbesondere eine Verbesserung bei Gleitringdichtungsanordnungen zum Einsatz in der Steriltechnik, z.B. Medizintechnik oder Lebensmittelverarbeitung. Bei derartigen Anwendungen geht es häufig um die Abdichtung von Fluiden mit einem besonders hohen Reinheitsgrad, wie z.B. sog. Reinstwasser, bei denen durch die Gleitringdichtungsanordnung keine Beeinträchtigung des Reinheitsgrades bewirkt werden sollte. Eine in diesem Sinne wirksame Massnahme ist die weitestgehende Vermeidung von Ablagerungen an den dem Fluid ausgesetzten Bereichen der Gleitringdichtungsanordnung, z.B. die Vermeidung von Toträumen.

Es ist bei Gleitringdichtungsanordnungen bekannt, einen der zusammenwirkenden Gleitringe in einem Trägergehäuse zu montieren, das seinerseits mittels eines auf ein rotierendes Bauteil drehfest aufgesetzten Montagerings zu einer gemeinsamen Drehung mit dem Montagering veranlasst wird und gleichzeitig axial relativ zum Montagering beweglich ist (DE 1 675 200 A). Zur Übertragung einer Drehkraft zwischen den Teilen können in das Trägergehäuse ein oder mehrere stiftförmige runde Mitnehmerelemente eingesetzt werden, die radial abstehen und in Ausnehmungen im Montagering eingreifen können (DE 202 02 177 U). Die Befestigung der stiftförmigen Mitnehmerelemente kann durch Schweissen erfolgen. Danach ist eine spanende Nachbearbeitung des Trägergehäuses erforderlich, um aussen überstehende Teile der Mitnehmerelemente zu beseitigen. Dennoch kann nicht ausgeschlossen werden, dass winzige Toträume verbleiben, in den sich Ablagerungen bilden können. Für eine steriltechnische Anwendung ist ferner nachteilig, dass Schweissen bei den in der Steriltechnik zur Anwendung kommenden Materialien für die Gleitringdichtungsanordnung mit sehr geringem Ferritgehalt vermieden werden muss, da hierdurch der Ferritgehalt in unzulässiger Weise heraufgesetzt werden könnte. Schliesslich bedeuten die stiftförmigen Mitnehmerelemente Linienberührung an den an der Drehkraftübertragung beteiligten Bereichen, was erhöhter Verschleiss und Abrieb zur Folge haben kann.

Eine Gleitringdichtungsanordnung gemäß dem Oberbegriff vom Anspruch 1 ist auch aus dem Dokument DE 29 800 172 U1 bekannt.

In Anbetracht der aufgezeigten Mängel liegt der Erfindung die Aufgabe zugrunde, eine verbesserte Gleitringdichtungsanordnung der eingangs erwähnten Art mit besonderer Eignung für den steriltechnischen Einsatz zu schaffen.

Zur Lösung dieser Aufgabe wird auf den Patentanspruch 1 verwiesen. Ein Vorteil aus dem Vorsehen eines am Trägergehäuse in Pressitz gehaltenen Übertragungsringes mit Vorsprungsmitnehmerelementen ist, dass dadurch auf Schweissungen verzichtet werden kann und am Trägergehäuse aussen keinerlei Überstände entstehen, die eine sorgfältige spanende Nachbearbeitung erforderlich machten. Durch die Erfindung kommt ferner keine Erhöhung des Ferritgehalt der Materialen der Gleitringdichtungsanordnung zustande. Das Trägergehäuse kann eine erwünschte glatte äussere Umfangsoberfläche frei von Toträumen haben. Die Vorsprungsmitnehmerelemente können in fertigungstechnisch einfach zu realisierender Weise integrale Bestandteile des Übertragungsringes darstellen und dabei vorzugsweise eine Umrisskonfiguration aufweisen, die eine flächigen Eingriffnahme mit benachbarten Bereichen der Ausnehmungen im Montageelement ermöglichen, um verschleissbedingten Abrieb auszuschalten bzw. zu minimieren. Die Bereitstellung und Montage der Gleitringdichtungsanordnung erweisen sich gegenüber bekannten Ausgestaltungen einfacher.

Die Erfindung wird nachfolgend anhand einer Ausführungsform und der Zeichnung näher erläutert. Es zeigen:
- Fig. 1: in längsgeschnittener Teilansicht eine Gleitringdichtungsanordnung ge- mäss einer Ausführungsform der Erfindung,
- Fig. 2: in perspektivischer auseinandergezogener Ansicht eine Drehkraftübertra- gungseinrichtung gemäss der Erfindung zusammen mit einem Trägerge- häuse der Gleitringdichtungsanordnung nach Fig. 1, und
- Fig. 3: eine geschnittene Teilansicht eines Übertragungsringes der Dreh- kraftübertragungseinrichtung.

Obschon die Erfindung vorzugsweise in Verbindung mit der Steriltechnik, insbesondere zur Abdichtung von Fluiden mit hohem Reinheitsgrad wie Reinstwasser zur Anwendung kommt, versteht es sich, dass die Erfindung auf dieses Anwendungsgebiet nicht beschränkt ist, sondern grundsätzlich bei Gleitringdichtungen schlechthin vorteilhaft angewendet werden kann.

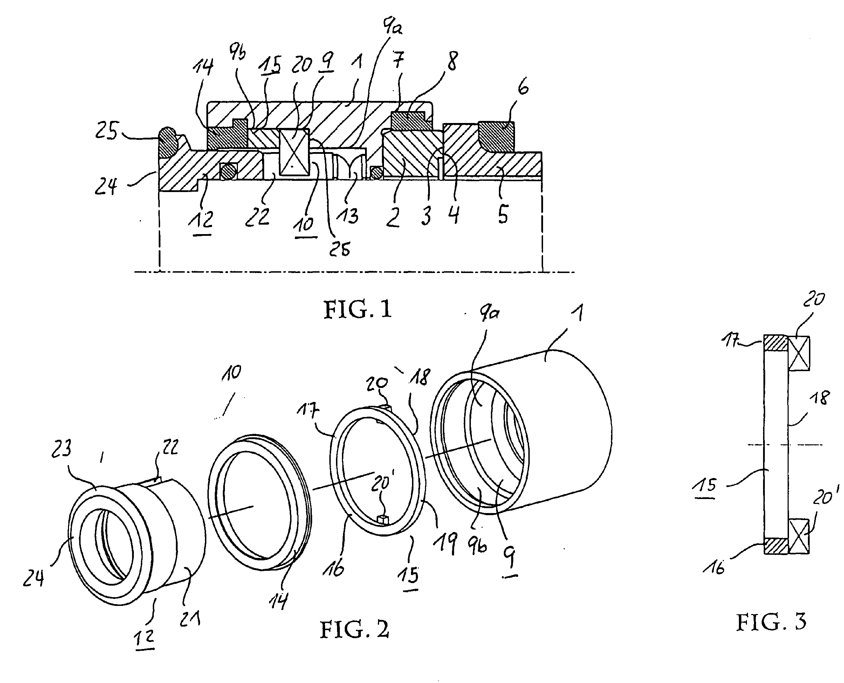

Mit dem Bezugszeichen 1 in Fig. 1 ist ein im Wesentlichen rohrförmiges Trägergehäuse 1 gezeigt, das vorzugsweise eine feingeschliffene oder polierte äussere Umfangsfläche hat, die frei von Einkerbungen oder Absätzen ist, an denen sich Ablagerungen bilden könnten. Ein am Trägergehäuse 1 gehaltener Gleitring 2 hat eine Gleit- oder Dichtfläche 3, die mit einer ebensolchen Fläche 4 eines stationären Gleitringes 5 zusammenwirkt, um einen Bereich aussenumfänglich der Dichtflächen 3, 4 gegenüber einem Raum innenumfänglich abzudichten. Der Gleitring 5 kann an einem Welldurchtrittsbereich eines Gehäuses (nicht gezeigt) einer abzudichtenden Gerätschaft, z.B. Pumpe, drehfest gehalten sein, wobei ein Sekundärdichtungselement 6 eine Abdichtung zwischen dem Gehäuse und dem Gleitring 5 schafft. Geeignete Sekundärdichtungselemente für steriltechnische Anwendungen sind dem Fachmann bekannt, so dass sich eine nähere Erläuterung erübrigt.

Seitens eines axialen Endes (in der Zeichnung rechtsseitiges Ende) ist in das Trägergehäuse 1 eine Aussparung 7 eingebracht, in deren äusseren Umfang eine Nut zur Aufnahme eines Mitnehmerringes 8 aus nachgiebigem Material eingebracht ist. In den Mitnehmerring 8 ist der Gleitring 5 kraftschlüssig eingesteckt, wodurch eine drehkraftübertragende Verbindung zwischen dem Gleitring 5 und dem Trägergehäuse 1 geschaffen wird. Für die Zwecke der vorliegenden Erfindung erübrigt es sich, die Ausgestaltung des Mitnehmerringes 8 mit weiteren Details zu erläutern.

Seitens des anderen axialen Endes (in der Zeichnung linksseitiges Ende) ist in das Trägergehäuse 1 eine weitere abgestufte Aussparung 9 zur Anordnung und Montage einer Drehkraftübertragungseinrichtung vorgesehen, die das allgemeine Bezugszeichen 10 trägt. Aufgabe der Drehkraftübertragungseinrichtung 10 ist es, einen auf einem rotierenden Bauteil (nicht gezeigt), z.B. einer Pumpenwelle, drehfest montierbaren Montagering 12 mit dem Trägergehäuse 1 so zu verknüpfen, dass eine Drehung des Montageringes 12 eine ebensolche Drehung des Trägergehäuses 1 bewirkt.

Das Trägergehäuse 1 ist relativ zum Montagering 12 axial beweglich. Zwischen dem Montagering 12 und dem Trägergehäuse 1 ist eine Vorspannfeder 13, z.B. Weilfeder, angeordnet, die bewirkt, dass das axial bewegliche Trägergehäuse 1 gegen den stationären Gleitring 5 vorgespannt ist, um die zusammenwirkenden Dichtflächen 3, 4 der Gleitringe 2, 5 in einem dichtenden Eingriff miteinander zu halten. Zum näheren Aufbau von Wellfedern kann auf BURGMANN, ABC der Gleitringdichtung, 1988, Selbstverlag, Seite 80 verwiesen werden.

Ein Sekundärdichtungselement 14 ist vorgesehen, um die Aussparung 9 nach aussen abzuschliessen und gleichzeitig eine Abdichtung zwischen dem Montagering 12 und dem Trägergehäuse 1 zu schaffen, ohne die axiale Beweglichkeit des Trägergehäuses 1 wesentlich zu beeinträchtigen.

Die Drehkraftübertragungseinrichtung 10 ist in Fig. 2 gezeigt und umfasst einen das allgemeine Bezugszeichen 15 aufweisenden Übertragungsring, der mit weiteren Details in Fig. 3 gezeigt ist. Der Übertragungsring 15 ist in der Aussparung 9 durch Presssitz zwischen dem äusseren Umfang des Übertragungsringes 15 und einer benachbarten Umfangsfläche der Aussparung 9 gehalten, so dass zwischen dem Übertragungsring 15 und dem Trägergehäuse 1 eine feste, schlupffreie, drehkraftübertragende Beziehung vorliegt.

Vorzugsweise wird der Presssitz durch Einwirken einer äusseren axialen Kraft auf den Übertragungsring 15 durch Einpressen in die Aussparung 9, nicht dagegen infolge Schrumpfung nach Einwirkung erhöhter Temperaturen erhalten. Die Erfindung ist jedoch auf ein Einpressen des Übertragungsringes 15 nicht beschränkt, sondern umfasst auch einen Presssitz in Gestalt eines Schrumpfsitzes.

Der Übertragungsring 15 umfasst, wie in Fig. 2 und 3 gezeigt ist, einen kontinuierlichen ringförmigen Basiskörper 16 mit einem vorzugsweise rechteckförmigen Querschnitt mit äusseren und inneren Stirnflächen 17, 18 in radialen Ebenen. Die äussere Stirnfläche 17 schafft eine Anlagefläche für das Sekundärdichtungselement 14. Der Basiskörper 16 hat ferner eine zylindrische Umfangsfläche 19, die in ihren radialen und axialen Abmessungen so gestaltet ist, dass zwischen ihr und dem inneren Umfang der Aussparung 9 der vorgenannte Presssitz zustande kommen kann.

Von der inneren Stirnfläche 18 des Basiskörpers 16 ragt ein Paar Vorsprungsmitnehmerelemente 20, 20' ab, von denen nur eines in Fig. 1 gezeigt ist. Die Vorsprungsmitnehmerelemente 20, 20' sind längs des Umfanges des Basiskörpers 16 diametral zueinander angeordnet. Jedes Vorsprungsmitnehmerelement 20, 20' kann einen Vieleckblock mit vorzugsweise viereckförmige Umrisskonfiguration mit ebenen Oberflächen darstellen und ragt von der benachbarten Stirnfläche 18 sowohl axial als auch radial um geeignete kurze Wegstrecken nach innen ab. Die Oberseite des Vorsprungsmitnehmerelementes 20 ist so angeordnet, dass das Vorsprungsmitnehmerelement 20 den äusseren Umfang 19 des Basiskörpers 16 radial nicht überragt. Die Oberseite des Vorsprungsmitnehmerelementes 20 kann jedoch, wenn erwünscht, mit dem äußeren Umfang 19 des Basiskörpers 16 auch fluchten.

Der Übertragungsring 15 stellt vorzugsweise ein einstückiges z.B. durch spanabhebende Bearbeitung geschaffenes Bauteil aus einem metallischen, für steriltechnische Anwendungen geeigneten Material mit einem sehr geringem Ferritgehalt von z.B. ≤ 1 % dar. Die Erfindung ist jedoch hierauf nicht eingeschränkt, sondern es können, wenn erwünscht, auch andere geeignete Materialien verwendet werden. Bei nicht steriltechnischen Anwendungen könnten die Vorsprungsmitnehmerelemente 20, 20' mittels einer geeigneten Fügetechnik, z.B. durch Schweissen oder Löten, am Basiskörper 16 des Übertragungsringes 15 montiert sein.

Der Montagering 12, enthält, wie in Fig. 1 und 2 zu erkennen ist, in einem rohrförmigen axialen Ansatzbereich 21 ein Paar diametral voneinander beabstandete, schlitzförmige, längliche Ausnehmungen oder Nuten 22, 22', von denen nur eine in der Zeichnung gezeigt ist. Die Ausnehmungen 22, 22' erstrecken sich in axialer Richtung über eine geeignete Länge des rohrförmigen Ansatzbereiches 21 und nehmen ihren Ausgang von dessen inneren der Vorspannfeder 13 zugewandten Stirnfläche, an der sich die Vorspannfeder 13 mit einem Ende abstützt.

Die Ausnehmungen 22, 22' sind zu den Vorsprungsmitnehmerelementen 20, 20' des Übertragungsringes 15 radial ausgerichtet und so bemessen, dass die Vorsprungsmitnehmerelemente 20, 20', wie Fig. 1 zeigt, in die betreffenden Ausnehmungen 22, 22' hineinragen können, um eine kuppelnde lösbare Verbindung zwischen dem Montagering 12 und dem Übertragungsruing 15 zu schaffen, die eine relative axiale Bewegung zwischen diesen Teilen ermöglicht. Insbesondere wird eine Drehkraft über eine betreffende der seitlichen Flanken der Ausnehmungen 22, 22' auf die Vorsprungsmitnehmerelemente 20, 20' übertragen. Wegen der viereckförmigen Umrisskonfiguration der Vorsprungsmitnehmerelemente 20, 20' kommt eine flächige Eingriffnahme mit den Seitenflanken der Ausnehmungen 22, 22' zustande, was anders als bei einer linienförmigen Eingriffnahme in vorteilhafter Weise Verschleiss und verringerte Bildung von Abrieb zur Folge hat.

Der Montagering 12 kann einen äusseren erweiterten Endbereich 23 mit einer Stirnfläche 24 haben, die eine Montagefläche zur Anlage an einem Absatzbereich eines rotierenden Bauteiles bildet. Im Endbereich 23 kann aussenumfänglich ein geeignetes Dichtungselement 25 in einer Ringnut angeordnet sein, das in dichtendem Eingriff mit dem Absatzbereich treten kann.

Bei der Montage der Dichtungsanordnung wird zunächst die Vorspannfeder 13 in einem im Durchmesser verkleinerten inneren Abschnitt 9a der Aussparung 9 eingelegt, bis ein axiales Ende der Feder in Anlage mit dem Trägergehäuse 1 kommt. Danach wird der Übertragungsring 15 mit in Richtung auf die Feder 13 weisenden Vorsprungsmitnehmerelementen 20 in einem im Durchmesser vergrösserten Abschnitt 9b der Aussparung 9 eingepresst, bis die Vorsprungsmitnehmerelemente 20 gegen eine innere Absatzfläche 25 der Aussparung stossen. Anschliesend wird der Montagering 12 mit zu den Vorsprungsmitnehmerelementen 20, 20'ausgerichteten Ausnehmungen 22, 22' von aussen eingeschoben, bis seine innnere Strirnfläche in Anlage mit der Feder 13 kommt. Dabei gelangen die Vorsprungsmitnehmerelemente 20, 20' in die Ausnehmungen 22, 22.' Zuletzt wird von aussen das Dichtungselement 14 in die Aussparung 9 eingesetzt, bis ein Ringflansch am Dichtungselement in eine nahe dem äussere Ende der Aussparung 9 vorgesehen Ringnut einschnappt.

Bei der vorbeschriebenen Ausführung der Erfindung ist aus Symmetriegründen ein Paar Vorsprungsmitnehmerelemente vorgesehen. Wenn erwünscht, kann auch nur ein Vorsprungsmitnehmerelement oder können drei oder mehr Vorsprungsmitnehmerelemente am Übertragungsring angeordnet sein. Die Vorsprungsmitnehmerelemente brauchen nicht die erwähnte Viereckform aufweisen, obschon diese in mehrfacher Hinsicht vorteilhaft ist und eine erleichterte spanende Bearbeitung ermöglicht. Es könnten auch andere Umrisskonfigurationenen vorgesehen werden, sofern diese seitliche Mitnehmerflächen schaffen, die eine flächige Eingriffnahme mit den Seitenflanken der Ausnehmungen ermöglichen. In Fällen, bei denen das Trägergehäuse nicht axial beweglich ist, können auch nur kurze an die axialen Abmessungen der Vorsprungselemente angepasste Ausnehmungen im Montagering eingebracht sein.

## Patentansprüche

1. Gleitringdichtungsanordnung mit einem Paar zusammenwirkender Gleitringe (2, 9), von denen einer drehunbeweglich gehalten ist und der andere zur gemeinsamen Drehung mit einem rotierenden Bauteil vorgesehen ist, wobei einer der Gleitringe (2) axial beweglich und gegen den anderen Gleitring (5) federvorgespannt ist, einem Trägergehäuse (1), dem nahe einem seiner axialen Enden der rotierende Gleitring (2) gehalten ist, einem am rotierenden Bauteil drehfest montierbaren Montageelement (12), und einer Drehkraftübertragungseinrichtung (10) zur Übertragung einer Drehkraft zwischen dem Montageelement (12) und dem Trägergehäuse (1), **dadurch gekennzeichnet, dass** die Drehkraftübertragungseinrichtung (10) einen am Trägergehäuse (1) nahe dessen anderen axialen Ende in Presssitz gehaltenen Übertragungsring (19) mit wenigstens einem in eine ausgerichtete Ausnehmung (22) im Montageelement (12) eingreifenden Vorsprungsmitnehmerelement (20) umfasst.

2. Gleitringdichtungsanordnung nach Anspruch 1, **dadurch gekennzeichnet, dass** ein Paar diametral zueinander versetzt angeordnete Vorsprungsmitnehmerelemente (20, 20') am Übertragungsring (15) vorgesehen sind, die in ein Paar dazu ausgerichteter Ausnehmungen (22, 22') im Montageelement (12) eingreifen.

3. Gleitringdichtungsanordnung nach Anspruche 1 oder 2 **dadurch gekennzeichnet, dass** das oder jedes Vorsprungsmitnehmerelement (20, 20') integraler Bestandteil des Übertragungsringes (15) ist.

4. Gleitringdichtungsanordnung nach einem der vorhergehenden Ansprüche, **dadurch gekennzeichnet, dass** das oder jedes Vorsprungsmitnehmerelement (20, 20') in Umfangsrichtung weisende flächige Mitnehmerbereiche hat.

5. Gleitringdichtungsanordnung nach Anspruch 4, **dadurch gekennzeichnet, dass** jedes Vorsprungsmitnehmerelement (20, 20') eine vieleckförmige Umrisskonfiguration hat.

6. Gleitringdichtungsanordnung nach einem der vorhergehenden Ansprüche, **dadurch gekennzeichnet, dass** der rotierende Gleitring axial beweglich ist und jede Ausnehmung (22, 22') im Montageelement (12) axialschlitzförmig ausgebildet ist.

7. Gleitringdichtungsanordnung nach einem der vorhergehenden Ansprüche, **dadurch gekennzeichnet, dass** jedes Vorsprungsmitnehmerelement (20, 20') als vom Übertragungsring (15) axial und radial abstehender Vieleckblock ausgebildet ist.

8. Gleitringdichtungsanordnung nach einem der vorhergehenden Ansprüche, **dadurch gekennzeichnet, dass** der Übertragungsring (15) einen ringförmigen Basiskörper (16) mit einer Stirnfläche (17) hat, die als Anlagefläche für ein ringförmiges am Trägergehäuse gehaltenes Dichtungselement (14) dient.

## Claims

1. A mechanical seal assembly, comprising
a pair of co-operating seal rings (2, 5), one of which is held rotationally fixed and the other of which is provided to rotate together with a rotating component, wherein one of the seal rings (2) is axially movable and biased by a spring against the other seal ring (5),
a retainer housing (1) at which the rotating seal ring (2) is retained near one axial end thereof,
a mounting member (12) configured to be mounted rotationally fixed at the rotating member, and
a rotatory force transmission device (10) for transmitting a rotatory force between the mounting member (12) and the retainer housing (1),
**characterized in that** the rotatory force transmission device (10) comprises a transmitting ring (19) retained in a press-fit manner at the retainer housing (1) near the other axial end thereof, the transmitting ring including at least one protruding engagement member (20) engaging in an aligned recess (22) in the mounting member (12).

2. The mechanical seal assembly of claim 1, **characterized in that** a pair of protruding engagement members (20, 20') being arranged diametrically offset is provided at the transmitting ring (15), said pair engaging into a pair of recesses (22, 22') in the mounting member (12) aligned thereto.

3. The mechanical seal assembly of claim 1 or 2, **characterized in that** the protruding engagement member or each protruding engagement member (20, 20') is an integral component of the transmitting ring (15).

4. The mechanical seal assembly of one of the preceding claims, **characterized in that** the protruding engagement member or each protruding engagement member (20, 20') has two-dimensional engagement portions facing into the circumferential direction.

5. The mechanical seal assembly of claim 4, **characterized in that** each protruding engagement member (20, 20') has a polygon outline.

6. The mechanical seal assembly of one of the preceding claims, **characterized in that** the rotating seal ring is axially movable and each recess (22, 22') in the mounting member (12) is formed as an axial slit.

7. The mechanical seal assembly of one of the preceding claims, **characterized in that** each protruding engagement member (20, 20') is formed as a polygon block axially and radially projecting from the transmitting ring (15).

8. The mechanical seal assembly of one of the preceding claims, **characterized in that** the transmitting ring (15) has an annular basic body (16) including an end face (17) which serves as an abutting surface for an annular sealing member (14) retained at the retainer housing.

## Revendications

1. Garniture mécanique d'étanchéité, avec une paire d'anneaux de glissement (2, 5) qui coopèrent, dont l'un est maintenu bloqué en rotation et l'autre est solidaire en rotation d'un élément rotatif, sachant qu'un des anneaux de glissement (2) est mobile en direction axiale et est précontraint par ressort contre l'autre anneau de glissement (5), avec un boîtier-support (1), l'anneau de glissement rotatif (2) étant maintenu sur ce boîtier à proximité d'une des extrémités axiales de ce dernier, avec un élément de montage (12) qui peut être monté bloqué en rotation sur l'élément rotatif, et avec un dispositif (10) de transmission de force de rotation pour transmettre une force de rotation entre l'élément de montage (12) et le boîtier-support (1), **caractérisée en ce que** le dispositif (10) de transmission de force de rotation comprend une bague de transmission (15) qui est maintenue en ajustement serré sur le boîtier-support (1) à proximité de son autre extrémité axiale et qui comporte au moins un élément entraîneur en saillie (20) venant en prise dans un évidement aligné (22) dans l'élément de montage (12).

2. Garniture mécanique d'étanchéité selon la revendication 1, **caractérisée en ce qu'**il est prévu sur la bague de transmission (15) une paire d'éléments entraîneurs en saillie (20, 20') disposés en étant diamétralement décalés l'un par rapport à l'autre, qui s'engagent dans une paire d'évidements (22, 22') dans l'élément de montage (12) qui sont alignés avec eux.

3. Garniture mécanique d'étanchéité selon la revendication 1 ou 2, **caractérisée en ce que** le ou chaque élément entraîneur en saillie (20, 20') fait partie intégrante de la bague de transmission (15).

4. Garniture mécanique d'étanchéité selon l'une des revendications précédentes, **caractérisée en ce que** le ou chaque élément entraîneur en saillie (20, 20') possède des régions entraîneuses surfaciques dirigées en direction circonférentielle.

5. Garniture mécanique d'étanchéité selon la revendication 4, **caractérisée en ce que** chaque élément entraîneur en saillie (20, 20') possède une configuration de contour polygonale.

6. Garniture mécanique d'étanchéité selon l'une des revendications précédentes, **caractérisée en ce que** l'anneau de glissement rotatif est axialement mobile, et chaque évidement (22, 22') dans l'élément de montage (12) est réalisé sous forme de fente axiale.

7. Garniture mécanique d'étanchéité selon l'une des revendications précédentes, **caractérisée en ce que** chaque élément entraîneur en saillie (20, 20') est réalisé sous la forme d'un bloc polygonal faisant axialement et radialement saillie de la bague de transmission (15).

8. Garniture mécanique d'étanchéité selon l'une des revendications précédentes, **caractérisée en ce que** la bague de transmission (15) possède un corps de base annulaire (16) avec une face frontale (17) qui sert de face d'application pour un élément d'étanchéité annulaire (4) maintenu sur le boîtier-support.
